# EUROPÄISCHE PATENTSCHRIFT

(11) **EP 2 167 838 B1**
(45) Veröffentlichungstag und Bekanntmachung des Hinweises auf die Patenterteilung: **21.08.2013**
(21) Anmeldenummer: 08784235.7
(22) Anmeldetag: 18.06.2008
(51) Int. Cl.: F16F 15/134

(54) **ZWEIMASSENSCHWUNGRAD**
DUAL-MASS FLYWHEEL
VOLANT D'INERTIE À DEUX MASSES

(30) Priorität: 12.07.2007 DE 102007032486
(43) Veröffentlichungstag der Anmeldung: 31.03.2010
(73) Patentinhaber: Schaeffler Technologies AG & Co. KG, 91074 Herzogenaurach (DE)
(72) Erfinder: EDL, Ralf, 77855 Achern (DE)
(86) Internationale Anmeldenummer: PCT/DE2008/001030
(87) Internationale Veröffentlichungsnummer: WO 2009/006868

(56) Entgegenhaltungen:
- DE-A1- 3 931 428
- DE-A1- 19 753 440

## Beschreibung

Die vorliegende Erfindung betrifft ein Zweimassenschwungrad mit einem Dämpfer umfassend mindestens eine Feder, die sich einerseits an einem Flansch und andererseits an zwei den Flansch axial einfassenden Gegenscheiben abstützt, wobei an der Feder mindestens ein Umlenkelement angeordnet ist (aus der DE-A-197 53 440 bekannt).

Ein gattungsbildendes Zweimassenschwungrad ist ebenfalls beispielsweise aus der DE 37 21 709 A1 bekannt. Der bislang außen liegende Führungsring bedingt eine Ausführung der Gegenscheiben, die nur eine geringe Haltbarkeit gegenüber Übermomenten bietet. Die Gegenscheiben sind außen mit Flügeln versehen, die paarweise vernietet werden müssen. Im Innenbereich verlaufen die Gegenscheiben beidseitig des Flansches und müssen über Abstandsbolzen verbunden werden. Die Ableitung von schlagartigen Drehmomentveränderungen (impact) erfolgt von diesen Abstandsbolzen über Flanschanschläge direkt zur Sekundärseite. Bei derzeit verwendeten Federabmessungen werden die Gegenscheiben im Innenbereich extrem labil.

Eine Aufgabe der vorliegenden Erfindung ist es daher, ein Zweimassenschwungrad anzugeben, das gegenüber Drehmomentschlägen stabiler ist.

Dieses Problem wird gelöst durch ein Zweimassenschwungrad mit einem Dämpfer umfassend mindestens eine Feder, die sich einerseits an einem Flansch und andererseits an zwei den Flansch axial einfassenden Gegenscheiben abstützt, wobei an der Feder mindestens ein Umlenkelement angeordnet ist und wobei das Umlenkelement mit Führungsringen verbunden ist, die die Gegenscheiben axial einfassen und jeweils an der Außenseite der gegenscheiben (11) angeordnet sind. Die Führungsringe werden also nicht mehr, wie im Stand der Technik, an einem Ring angeordnet, der radial außerhalb des Flansches liegt und ebenfalls von den Gegenscheiben eingefasst wird, sondern von Führungsringen, die in axialer Richtung außerhalb von Flansch und Gegenscheiben liegen. Unter Einfassen wird hier verstanden, dass die Gegenscheiben beiderseits des Flansches angeordnet sind, bzw. die Führungsringe in axialer Richtung beiderseits der beiden Gegenscheiben, also in axialer Richtung außerhalb der Anordnung Gegenscheibe-Flansch-Gegenscheibe, angeordnet sind. Es entsteht so eine Abfolge in axialer Richtung Führungsring-Gegenscheibe-Flansch-Gegenscheibe-Führungsring. Die Federn sind vorzugsweise Druckfedern, die in Längsrichtung aus mindestens zwei Einzelfedern bestehen, wobei das Umlenkelement zwischen zwei Einzelfedern angeordnet ist. Diese Maßnahme verringert die durch die Biegung der Federn auftretende Reibung an Flansch bzw. Gegenscheiben.

Das Umlenkelement ist vorzugsweise ein gefaltetes Stanzteil, das Nasen auf beiden in Umfangsrichtung in Einbaulage außen gelegenen Enden aufweisen, wobei die Federelemente die Nasen einfassen. Ein derartiges Umlenkelement lässt sich leicht aus einem Blech durch Stanzen herstellen. Die Nasen auf beiden Seiten bewirken eine Zentrierung der Federelemente. Die Führungsringe weisen vorzugsweise Laschen mit Laschenöffnungen auf, in die Klauen der Umlenkelemente greifen. Man erhält so eine leicht montierbare und demontierbare formschlüssige Verbindung zwischen diesen Bauteilen. Die Laschenöffnungen sind dabei vorzugsweise Langlöcher und die Klauen weisen vorzugsweise einen dazu korrespondierenden rechteckigen Querschnitt auf. Durch diese Art der Verbindung sind die Umlenkelemente gegenüber den Führungsringen bezüglich einer Kippbewegung um eine relativ zur Kupplungsachse axial verlaufende Achse gesichert.

Im Folgenden werden Ausführungsbeispiele der Erfindung anhand der beiliegenden Zeichnungen erläutert. Dabei zeigen:
- Fig. 1: einen Halbschnitt durch ein Ausführungsbeispiel eines erfindungsgemäßen Zweimassenschwungrades;
- Fig. 2: das Ausführungsbeispiel der Fig. 1 in einer Aufsicht;
- Fig. 3: den Flansch des Ausführungsbeispiels der Fig. 1 in einer Aufsicht;
- Fig. 4: die Gegenscheibe des Ausführungsbeispiels der Fig. 1 in einer Aufsicht;
- Fig. 5: das Umlenkelement des Ausführungsbeispiels der Fig. 1 in einer räumlichen Darstellung;
- Fig. 6: einen Führungsring sowie darin angeordnete Klauen in einer Aufsicht.

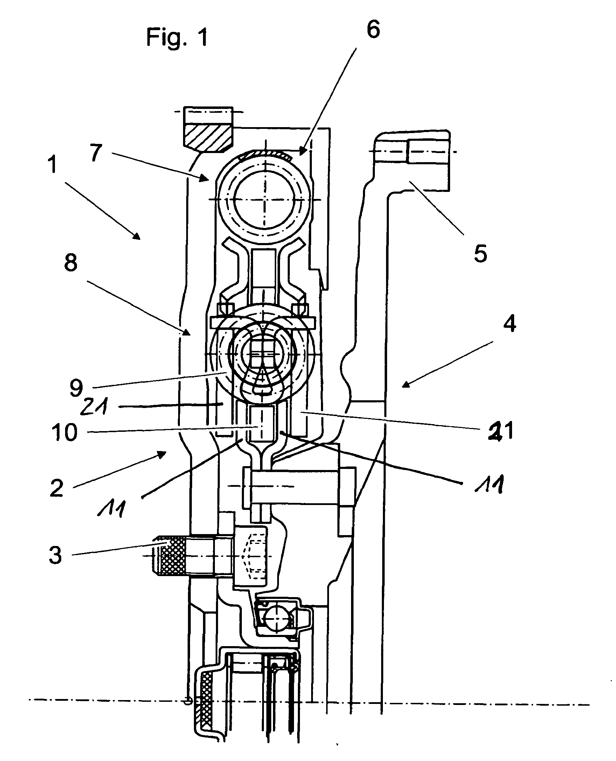

Fig. 1 zeigt einen Halbschnitt durch ein Ausführungsbeispiel eines erfindungsgemäßen Zweimassenschwungrades 1. Das Zweimassenschwungrad 1 umfasst eine Primärmasse 2, die mittels Gewindeschrauben 3 mit einer hier nicht dargestellten Kurbelwelle verbunden werden kann, sowie eine Sekundärmasse 4, die mit einer hier nicht dargestellten Kupplung beispielsweise mittels eines Kupplungsflansches 5 verbunden werden kann. Zwischen der Primärmasse 2 und der Sekundärmasse 4 ist eine Dämpferanordnung 6 angeordnet. Die Dämpferanordnung 6 ermöglicht eine Relativdrehung der Sekundärmasse 4 gegenüber der Primärmasse 2 gegen die Kraft eines Energiespeichers, beispielsweise einer Feder, sowie ggf. gegen einen viskosen Dämpfer oder Reibdämpfer. Im vorliegenden Ausführungsbeispiel umfasst die Dämpferanordnung im Wesentlichen Federelemente, die somit weder durch trockene Reibung noch durch sonstige Reibung nennenswert Energie dissipieren. Die Dämpferanordnung 6 umfasst einen Außendämpfer 7 sowie einen Innendämpfer 8. Sowohl der Außendämpfer 7 als auch der Innendämpfer 8 sind jeweils gebildet aus Druckfedern, die in Umfangsrichtung des Zweimassenschwungrads 1 angeordnet sind und an einem Federende von der primärseitigen Seite beaufschlagt werden und an dem anderen Federende von der sekundärseitigen Seite beaufschlagt werden. Derartige Zweimassenschwungräder sind grundsätzlich bekannt, daher wird hier nur detailliert auf den erfindungswesentlichen Unterschied zum Stand der Technik eingegangen. Dieser betrifft im vorliegenden Ausführungsbeispiel nur den Innendämpfer 8. Der Innendämpfer 8 umfasst Federn 9, die zwischen einem Flansch 10, der über den Außendämpfer 7 mit der Primärmasse 2 verbunden ist, sowie zweier Gegenscheiben 11, die mit der Sekundärmasse 4 verbunden sind, eingespannt sind.

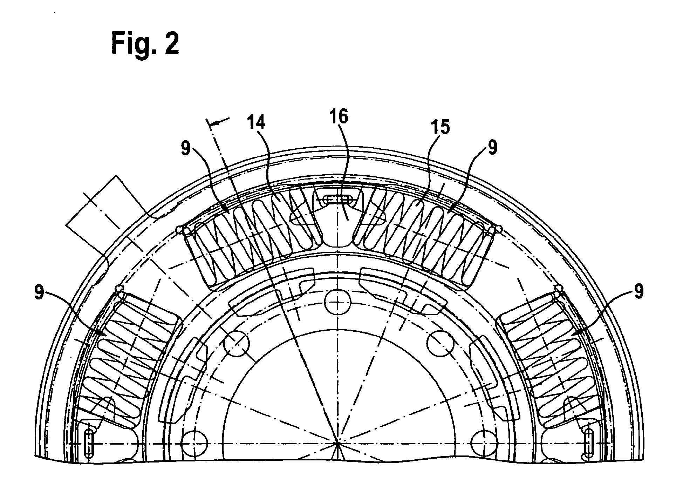

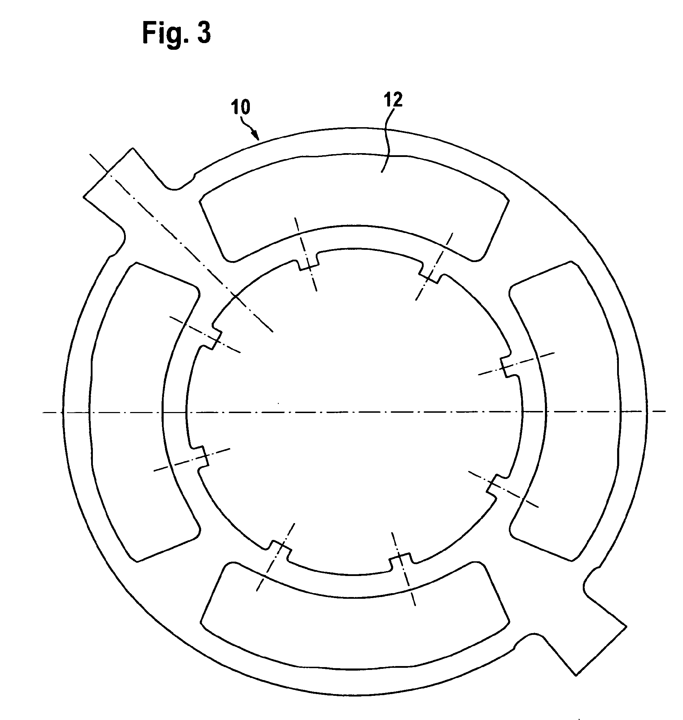

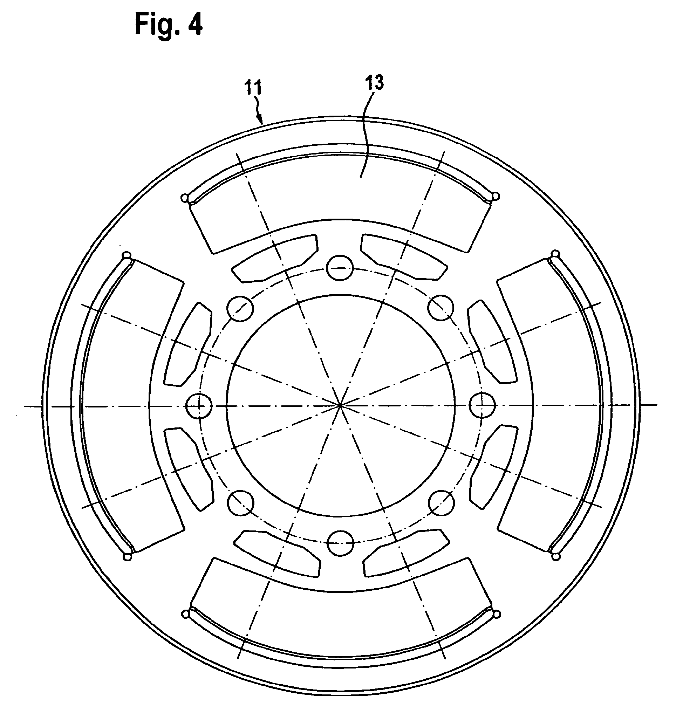

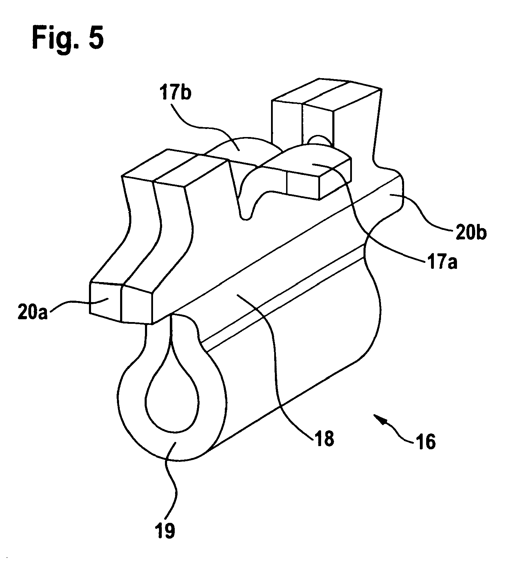

Fig. 2 zeigt das Ausführungsbeispiel der Fig. 1 in einer Aufsicht. Fig. 3 zeigt den Flansch 10 und Fig. 4 die Gegenscheibe 11 in der Aufsicht. Der Flansch 10 umfasst mehrere Flanschausnehmungen 12, die Gegenscheibe 11 umfasst mehrere Gegenscheibenausnehmungen 13. In den Flanschausnehmungen 12 und den Gegenscheibenausnehmungen 13 sind jeweils Federn 9 angeordnet, wobei diese je nach Richtung der Relativverdrehung des Flansches 10 gegenüber der Gegenscheibe 11 jeweils mit einer von zwei in Umfangsrichtung gegenüberliegenden Endflächen und so durch die Relativverdrehung des Flansches 10 gegenüber der Gegenscheibe 11 zusammengedrückt werden. Die Federn 9 sind wie aus Fig. 2 ersichtlich ist zweigeteilt und umfassen jeweils zwei Federelemente 14 und 15. Zwischen den Federelementen 14 und 15 ist ein Umlenkelement 16 angeordnet, das in Fig. 5 einzeln räumlich dargestellt ist. Das Umlenkelement 16 ist ein gefaltetes Stanzteil, wird also aus einem flachen Blech gefertigt, und umfasst zwei in Einbaulage axial sich erstreckende Klauen 17a und 17b, die jeweils gegenüberliegend angeordnet sind. Die Klauen 17a und 17b ragen in Einbaulage in axialer Richtung um etwa 90° gebogen von einem Grundkörper 18 ab. An der den Klauen 17a und 17b in Einbaulage in radialer Richtung gegenüberliegend ist eine Verdickung 19 angeordnet, die im Wesentlichen fertigungsbedingt ist, um den Biegeradius beim Falten des Bauteils zu begrenzen. In Einbaulage in Umfangsrichtung stehen auf beiden Seiten des Umlenkelements 16 Nasen 20a und 20b ab, die in Einbaulage von den Federelementen 14 bzw. 15 umgriffen werden, so dass diese durch die Nasen 20a, 20b gegen axiales bzw. radiales Verrutschen festgelegt sind.

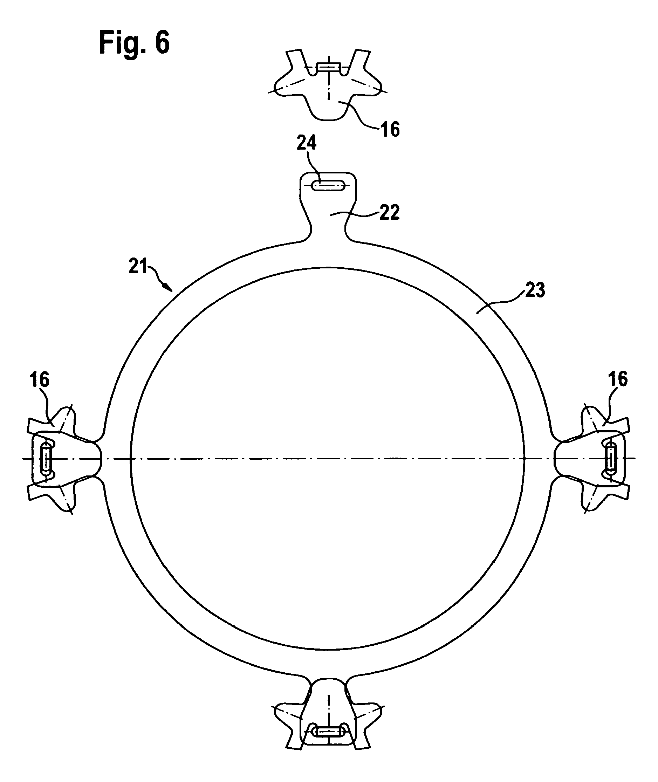

Die Umlenkelemente 16 werden durch zwei Führungsringe 21 gehalten, wobei die Führungsringe 21 jeweils an der Außenseite der Gegenscheiben 11 angeordnet sind, die beiden Führungsringe 21 fassen also die Gegenscheiben 11 ein. Die Führungsringe 21 umfassen Laschen 22, die sich von einem kreisförmigen Grundkörper 23 der Führungsringe 21 radial nach außen erstrecken und Laschenöffnungen 24 in Form von Langlöchern aufweisen, in die die Klauen 17a bzw. 17b eingreifen. Der Führungsring sowie darin angeordnete Klauen sind in Fig. 6 in einer Aufsicht dargestellt.

### Bezugszeichenliste

- 1: Zweimassenschwungrad
- 2: Primärmasse
- 3: Gewindeschraube
- 4: Sekundärmasse
- 5: Kupplungsflansch
- 6: Dämpferanordnung
- 7: Außendämpfer
- 8: Innendämpfer
- 9: Feder
- 10: Flansch
- 11: Gegenscheibe
- 12: Flanschausnehmung
- 13: Gegenscheibenausnehmung
- 14: Federelement
- 15: Federelement
- 16: Umlenkelement
- 17a: Klaue
- 17b: Klaue
- 18: Grundkörper
- 19: Verdickung
- 20a: Nase
- 20b: Nase
- 21: Führungsring
- 22: Lasche
- 23: Grundkörper
- 24: Laschenöffnung

## Patentansprüche

1. Zweimassenschwungrad (1) mit einem Dämpfer (8) umfassend mindestens eine Feder (9), die sich einerseits an einem Flansch (10) und andererseits an zwei den Flansch (10) axial einfassenden Gegenscheiben (11) abstützt, wobei an der Feder (9) mindestens ein Umlenkelement (16) angeordnet ist, **dadurch gekennzeichnet, dass** das Umlenkelement (16) mit Führungsringen (21) verbunden ist, die die Gegenscheiben (11) axial einfassen und jeweils an der Außenseite der Gegenscheiben (11) angeordnet sind.

2. Zweimassenschwungrad nach Anspruch 1, **dadurch gekennzeichnet, dass** die Feder (9) eine Druckfeder ist, die in Längsrichtung aus mindestens zwei Federelementen (14, 15) besteht, wobei das Umlenkelement zwischen zwei Federelementen angeordnet ist.

3. Zweimassenschwungrad nach Anspruch 2, **dadurch gekennzeichnet, dass** die Führungsringe je mindestens eine Lasche mit einer Laschenöffnung aufweisen, in die Klauen (17a, 17b) der Umlenkelemente (16) greifen.

4. Zweimassenschwungrad nach Anspruch 3, **dadurch gekennzeichnet, dass** das Umlenkelement (16) ein gefaltetes Stanzteil ist, das Nasen auf beiden in Umfangsrichtung in Einbaulage außen gelegenen Enden aufweist, wobei die Federelemente (14, 15) die Nasen (20a, 20b) einfassen.

5. Zweimassenschwungrad nach Anspruch 4, **dadurch gekennzeichnet, dass** mindestens eine Laschenöffnung ein Langloch ist und mindestens eine der Klauen (17a, 17b) einen dazu korrespondierenden rechteckigen Querschnitt aufweist.

## Claims

1. Dual-mass flywheel (1) having a damper (8) comprising at least one spring (9) which is supported on one side on a flange (10) and on the other side on two mating discs (11) which enclose the flange (10) axially, at least one deflection element (16) being arranged on the spring (9), **characterized in that** the deflection element (16) is connected to guide rings (21) which enclose the mating discs (11) axially and are arranged in each case on the outer side of the mating discs (11).

2. Dual-mass flywheel according to Claim 1, **characterized in that** the spring (9) is a compression spring which comprises in the longitudinal direction at least two spring elements (14, 15), the deflection element being arranged between two spring elements.

3. Dual-mass flywheel according to Claim 2, **characterized in that** the guide rings have in each case at least one bracket with a bracket opening, into which claws (17a, 17b) of the deflection elements (16) engage.

4. Dual-mass flywheel according to Claim 3, **characterized in that** the deflection element (16) is a folded punched part which has lugs on both ends which lie on the outside in the circumferential direction in the installed position, the spring elements (14, 15) enclosing the lugs (20a, 20b).

5. Dual-mass flywheel according to Claim 4, **characterized in that** at least one bracket opening is a slot and at least one of the claws (17a, 17b) has a rectangular cross section which corresponds thereto.

## Revendications

1. Volant d'inertie à deux masses (1) comprenant un amortisseur (8) comprenant au moins un ressort (9), lequel s'appuie d'une part contre une bride (10) et d'autre part contre deux disques conjugués (11) enserrant axialement la bride (10), au moins un élément de renvoi (16) étant disposé contre le ressort (9), **caractérisé en ce que** l'élément de renvoi (16) est connecté à des bagues de guidage (21) qui enserrent axialement les disques conjugués (11) et qui sont chacune disposées sur le côté extérieur des disques conjugués (11).

2. Volant d'inertie à deux masses selon la revendication 1, **caractérisé en ce que** le ressort (9) est un ressort de compression qui, dans la direction longitudinale, se compose d'au moins deux éléments de ressorts (14, 15), l'élément de renvoi étant disposé entre deux éléments de ressort.

3. Volant d'inertie à deux masses selon la revendication 2, **caractérisé en ce que** les bagues de guidage présentent chacune au moins une patte avec une ouverture de patte dans laquelle s'engagent des griffes (17a, 17b) des éléments de renvoi (16).

4. Volant d'inertie à deux masses selon la revendication 3, **caractérisé en ce que** l'élément de renvoi (16) est une pièce estampée pliée qui présente des nez aux deux extrémités situées à l'extérieur dans la direction périphérique dans la position d'installation, les éléments de ressort (14, 15) enserrant les nez (20a, 20b).

5. Volant d'inertie à deux masses selon la revendication 4, **caractérisé en ce qu'**au moins une ouverture de patte est un trou oblong et au moins l'une des griffes (17a, 17b) présente une section transversale rectangulaire correspondant à celui-ci.
